# EUROPÄISCHE PATENTANMELDUNG

(11) **EP 3 599 443 A1**
(43) Veröffentlichungstag der Anmeldung: **29.01.2020**
(21) Anmeldenummer: 18184951.4
(22) Anmeldetag: 23.07.2018
(51) Int. Cl.: G01B 11/24, A61C 9/00

(54) **VERFAHREN ZUM OPTISCHEN ERFASSEN DER OBERFLÄCHENGEOMETRIE VON ZAHNFLEISCH**

(71) Anmelder: a.tron3d GmbH, 9020 Klagenfurt am Wörthersee (AT)
(72) Erfinder: JESENKO, Juergen, 9587 Riegersdorf (AT)
(74) Vertreter: Beer & Partner Patentanwälte KG

(57) **Zusammenfassung**

Bei einem Verfahren zum optischen Erfassen der Oberflächengeometrie von Zahnfleisch (1) befindet sich im Bereich des zu erfassenden Zahnfleisches (11, 12) ein Objekt (5) mit bekannter Oberflächengeometrie (52), insbesondere ein Gingiva-Former. Es wird eine Oberflächengeometrie (11, 21, 31, 51) des Bereiches zusammen mit dem Objekt (5) optisch erfasst und die bekannte Oberflächengeometrie (52) des Objektes (5) wird von der erfassten Oberflächengeometrie (51) subtrahiert.

## Beschreibung

Die Erfindung betrifft ein Verfahren zum optischen Erfassen der Oberflächengeometrie von Zahnfleisch.

In der digitalen, dentalen Implantologie stellen sich verschiedene Herausforderungen und Probleme. Das primäre Problem des Erfassens der Zähne wird bereits durch viele nicht-invasive, insbesondere optische, Methoden gelöst. Probleme ergeben sich allerdings bei weichen Geweben, wie beispielsweise dem Zahnfleisch, der Zunge oder den Wangeninnenseiten, sowie bei Oberflächen, die nicht "sichtbar" sind. Unter "sichtbar" versteht man, dass eine Oberfläche für Scanner erfassbar ist, die auf der Basis von Sensoren und/oder Lichtquellen arbeiten, welche Licht im sichtbaren oder nahe dem sichtbaren Spektrum erfassen können und/oder aussenden. Bei Weichteilen stellt sich vor allem das Problem, dass diese weich und somit verformbar sind. Es ist daher leicht möglich, einander widersprechende Messungen zu erhalten, was zu ungenauen 3D-Bildern führt. Nicht sichtbare Flächen müssen aus anderen Quellen, wie beispielsweise 3D-Röntgen oder dergleichen, ergänzt werden.

Einen Spezialfall stellt Zahnfleisch mit einem Gingiva-Former und einem Implantat dar. Hier hat man entweder den Nachteil, dass ein für das weitere Planen der Implantation wesentlicher Teil des Zahnfleisches durch den Gingiva-Former selbst verdeckt wird und daher unsichtbar ist, oder man hat den Nachteil, dass sich das Zahnfleisch nach dem Entfernen des Gingiva-Formers zusammenzieht und daher keine präzisen Messungen möglich sind. Weiters neigt das Zahnfleisch unmittelbar nach dem Entfernen des Gingiva-Formers zum Bluten, was Messungen, bevor sich das Zahnfleisch zusammenziehen kann, ebenso schwierig gestaltet.

Der Erfindung liegt daher die Aufgabe zu Grunde, die oben beschriebenen Nachteile zu überwinden und eine Möglichkeit zum optischen Erfassen von Zahnfleisch, insbesondere im Bereich von Gingiva-Formern, zur Verfügung zu stellen.

Gelöst wird diese Aufgabe erfindungsgemäß durch ein Verfahren mit den Merkmalen des Anspruchs 1.

Bei einem erfindungsgemäßen Verfahren wird zunächst jener zu erfassende Bereich des Zahnfleisches gescannt, in welchem sich ein Objekt, insbesondere ein Gingiva-Former, mit bekannter Oberflächengeometrie befindet. Grundsätzlich ist die Verwendung von Gingiva-Formern für ein Abheilen des Zahnfleisches in einer bestimmten, gewünschten Form zur Vorbereitung von Implantationen aus der Zahnmedizin bekannt und erfolgt unabhängig vom erfindungsgemäßen Verfahren. Für das Scannen ist es nicht erforderlich, dass das gesamte Objekt sichtbar ist. Es genügt, wenn lediglich ein Bereich des Objektes erfasst wird. Da die Oberflächengeometrie des Objektes bekannt ist, kann aus der Lage eines Bereiches der Oberfläche die Lage der kompletten Oberfläche des Objektes hergeleitet werden. Dies gilt selbstverständlich nur, sofern die gemessene Oberflächengeometrie der bekannten Oberflächengeometrie hinreichend eindeutig zugeordnet werden kann. Hierfür kann das Objekt Marker, insbesondere asymmetrische Marker, aufweisen, die eine entsprechende Zuordnung vereinfachen.

Es wird davon ausgegangen, dass sich das Zahnfleisch unmittelbar am Objekt befindet und dass sich dort, wo sich das Objekt befindet, kein Zahnfleisch befinden kann. Wenn man die bekannte Oberflächengeometrie des Objektes von der erfassten Oberflächengeometrie subtrahiert, erhält man folglich die Oberfläche des Zahnfleisches im Bereich des Objektes. Dies insbesondere auch für jene Bereiche des Zahnfleisches, die nicht sichtbar sind, weil sie beispielsweise vom Objekt verdeckt werden.

Das Subtrahieren kann verschiedene Unterschritte beinhalten, wie beispielsweise das Ändern der Ausrichtung von Flächen, so dass als Außenseiten markierte Flächen als Innenseiten markiert werden und umgekehrt.

Grundsätzlich können sowohl die Oberflächengeometrie vor dem Subtrahieren als auch die Oberflächengeometrie nach dem Subtrahieren gespeichert werden. Entsprechend ist gemäß einer bevorzugten Ausführungsform der Erfindung vorgesehen, dass die erfasste und die errechnete Oberflächengeometrie hinterlegt werden und dass beide Oberflächengeometrien jeweils abwechselnd visualisiert werden.

In einer bevorzugten Weiterbildung der Erfindung erfolgt das abwechselnde Anzeigen aufgrund einer Eingabe durch einen Nutzer und der Wechsel beider Anzeigen erfolgt in Echtzeit.

Weitere bevorzugte Ausführungsformen der Erfindung sind Gegenstand der übrigen Unteransprüche.

Nachstehend wird ein bevorzugtes Ausführungsbeispiel der Erfindung anhand der Zeichnungen näher beschrieben. Es zeigt:
- Fig. 1: eine schematisierte Darstellung einer beispielhaften, intraoralen Situation,
- Fig. 2: eine schematisierte Darstellung einer erfassten Oberflächengeometrie,
- Fig. 3: die um eine bekannte Oberflächengeometrie ergänzte Oberflächengeometrie von Fig. 2,
- Fig. 4: eine schematisierte Darstellung einer erfassten und nach einem erfindungsgemäßen Verfahren bearbeiteten Oberflächengeometrie und
- Fig. 5: eine Weiterbildung der Erfindung analog zur Darstellung von Fig. 1.

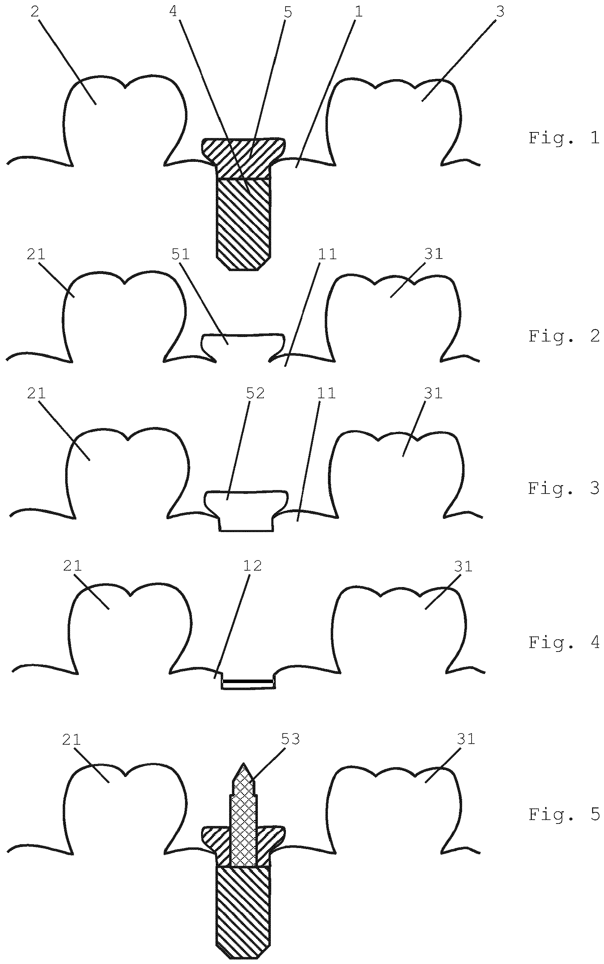

Die in Fig. 1 schematisiert gezeigte, beispielhafte, intraorale Situation weist zwei im Zahnfleisch 1 angeordnete Zähne 2, 3 auf. Weiters befindet sich im Zahnfleisch 1 und im der Einfachheit halber nicht dargestellten, darunter liegenden Knochen ein Implantat 4. Mit dem Implantat 4 ist ein Gingiva-Former 5, beispielsweise über ein Gewinde, verbunden. Der Gingiva-Former 5 ragt über das Zahnfleisch 1 hinaus und verdrängt dieses, so dass es in einer bestimmten Form abheilt. Das Implantat 4 ist im Zuge einer regulären zahnärztlichen Behandlung implantiert worden und wird zwar für das erfindungsgemäße Verfahren verwendet, wurde aber nicht eigens für das erfindungsgemäße Verfahren implantiert. Analog ist auch der Gingiva-Former 5 unabhängig von der Erfindung im Zuge einer regulären Behandlung eingeschraubt worden

Für die Erfindung wesentlich ist, dass die genaue Oberflächengeometrie des aus dem Zahnfleisch 1 ragenden Objektes wenigstens in Teilbereichen bekannt ist. Ob es sich dabei um einen Gingiva-Former 5 oder ein anderes Objekt mit einem anderen Zweck handelt, ist für die Erfindung unerheblich. Gemäß einer Weiterbildung der Erfindung wird eine entsprechende, bekannte Oberflächengeometrie oder ein repräsentatives Objekt mit einer entsprechenden, bekannten Oberflächengeometrie von einem Nutzer beispielsweise aus einer Datenbank ausgewählt.

Fig. 2 zeigt eine Oberflächengeometrie, wie sie mit einem optischen Scanner von der in Fig. 1 dargestellten intraoralen Situation erzeugt werden kann. Der besseren Übersicht halber sind alle Oberflächengeometrien in den Figuren 2 bis 4 nur als zweidimensionale Repräsentationen dargestellt, obwohl sie in der Realität als dreidimensionale Repräsentation vorliegen. Man erkennt die Oberflächengeometrien der Zähne 21, 31, die Oberflächengeometrie des Zahnfleisches 11 und die Oberflächengeometrie eines Teils des Gingiva-Formers 15. Erfindungsgemäß wird die Oberflächengeometrie des Teils des Gingiva-Formers 51 identifiziert. Dies kann beispielsweise erfolgen, indem man versucht, eine bekannte Oberflächengeometrie des Gingiva-Formers 52 (siehe Fig. 3) in die erfasste Oberfläche einzupassen. Hierfür kann beispielsweise der bekannte Iterative Closest Point Algorithmus (ICP Algorithmus) verwendet werden.

Im Zuge des Identifizierens des Bereiches der erfassten Oberflächengeometrie, welcher einen Teil der Oberflächengeometrie des Gingiva-Formers 51 zeigt, kann außerdem die räumliche Orientierung des Gingiva-Formers relativ zum Zahnfleisch bestimmt werden.

Fig. 3 zeigt schematisiert die erfasste Oberflächengeometrie von Fig. 2 mit der in die erfasste Oberflächengeometrie eingepassten, bekannten Oberflächengeometrie des Gingiva-Formers 52. Erfindungsgemäß wird die bekannte Oberflächengeometrie des Gingiva-Formers 52 von der erfassten Oberflächengeometrie des Zahnfleisches 11 subtrahiert. Dies erfolgt in zwei Schritten, die in beliebiger Reihenfolge nacheinander oder auch simultan erfolgen können.

In dem einen Schritt wird der sichtbare Anteil der bekannten Oberflächengeometrie des Gingiva-Formers 52 verarbeitet. Dieser sichtbare Anteil wird vollständig aus der erfassten Oberflächengeometrie entfernt.

Im anderen Schritt wird der nicht sichtbare Teil der bekannten Oberflächengeometrie des Gingiva-Formers 52 verarbeitet. Dieser nicht sichtbare Anteil der bekannten Oberflächengeometrie des Gingiva-Formers 52 wird umgekehrt, so dass Innenseiten der Oberflächengeometrie zu Außenseiten werden und umgekehrt, also die Ausrichtung der Seiten bzw. Flächen geändert wird.

Die genaue Methode für das Umkehren der Oberflächen hängt von der Notation der Oberflächengeometrien ab. Beispielhaft, jedoch nicht beschränkend, werden nachfolgend die Methoden für Oberflächengeometrien, die als vorzeichenbehaftete Distanzfunktion (SDF und TSDF) und als Polygon-Netz notiert sind, beschrieben.

Bei vorzeichenbehafteten Distanzfunktionen wird angegeben, wie weit eine Oberfläche in einer Blickrichtung von einem bestimmten Punkt innerhalb eines Voxelgrids entfernt ist. Das Vorzeichen gibt dabei an, ob sich der Punkt in Blickrichtung vor oder hinter der Oberfläche befindet bzw. innen oder außen liegt. Kehrt man innerhalb einer vorzeichenbehafteten Distanzfunktion das Vorzeichen um, wird auch die Ausrichtung der Oberfläche geändert und somit, welche Seite innen und welche Seite außen liegt. Da bei dieser Art die Oberflächen umzukehren besonders wenige Schritte durchgeführt werden müssen und es rechnerisch besonders einfach und daher auch ressourcenschonend ist, werden die Oberflächengeometrien als TSDF notiert und behalten diese Notation besonders bevorzugt auch während des Subtrahierens bei.

Bei polygonalen Notationen setzt sich die Oberflächengeometrie aus vielen (ebenen) Polygonen, üblicherweise Dreiecken, zusammen. Die Anzahl der Polygone, die für eine bestimmte Oberfläche verwendet werden, bestimmt daher, wie genau die notierte Oberflächengeometrie an eine reale Oberfläche angenähert werden kann. Für jedes Polygon werden die Eckpunkte des Polygons im Raum sowie ein Vektor notiert. Der Vektor steht normal zur Fläche des Polygons und seine Richtung gibt an, welche Seite des Polygons innen liegt und welche Seite außen liegt. Sollen Innen- und Außenseite einer Oberflächengeometrie getauscht werden, ist es daher erforderlich, die Richtung der Normalvektoren der Polygone der Notation umzudrehen.

Für das Subtrahieren ist es vollkommen unerheblich, welcher der beiden Schritte zuerst erfolgt. Wenn hinreichende Rechenressourcen zur Verfügung stehen, können beide Schritte auch gleichzeitig durchgeführt werden. Gemäß einer bevorzugten Weiterbildung der Erfindung erfolgen alle Schritte aber in Echtzeit. Dass heißt, dass für den Nutzer zwischen dem Starten des Vorgangs und dem Anzeigen der ersten sichtbaren bzw. visualisierten Resultate im Wesentlichen keine wahrnehmbare Zeit vergeht.

Fig. 4 zeigt die erfasste Oberflächengeometrie nach dem Subtrahieren. Aus der umgekehrten Oberflächengeometrie der nicht sichtbaren Anteile der bekannten Oberflächengeometrie des Gingiva-Formers wurde eine errechnete Oberflächengeometrie des Zahnfleischs 12 gebildet.

In einer bevorzugten Weiterbildung der Erfindung wird in einem Bereich um die subtrahierte Oberflächengeometrie herum eine Umgebungsfarbe der errechneten Oberflächengeometrie 12 erfasst und die errechnete Oberflächengeometrie 12 wird in einer Farbe entsprechend der erfassten Umgebungsfarbe angezeigt. Vereinfacht gesagt, wird die künstlich eingefügte Oberflächengeometrie so dargestellt, dass sie der Farbe des umliegenden Zahnfleisches 1 entspricht. Dies macht die Handhabung einer nach einem erfindungsgemäßen Verfahren arbeitenden Vorrichtung für den Nutzer natürlicher und damit angenehmer.

In einer bevorzugten und auch unabhängig von der Erfindung vorteilhaften Weiterbildung kann aus der räumlichen Lage des Gingiva-Formers 5 auch die räumliche Lage des Implantats 4 hergeleitet werden. Dafür ist es lediglich notwendig zu wissen, wie genau Implantat 4 und Gingiva-Former 5 miteinander verbunden sind. Da üblicherweise bekannte Gewinde verwendet werden, die mit einem bekannten bzw. vorgegebenen Drehmoment angezogen sind, kann folglich die räumliche Lage beider Objekte ebenfalls als bekannt angesehen werden. Gibt es verschiedene Möglichkeiten für die Oberflächengeometrie des Implantats 4, kann auch diese analog zur Oberflächengeometrie des Gingiva-Formers 5 aus einer Datenbank ausgewählt werden.

Da sich die Lage von Zähnen und Knochen zueinander nur sehr langsam und mit aktiver Einflussnahme von außen verändert, kann davon ausgegangen werden, dass - sofern keine kieferorthopädischen Maßnahmen erfolgt sind - die Zähne relativ zu den Knochen, in welche diese eingebettet sind, in einer konstanten, räumlichen Lage stehen. Es ist vorgesehen, dass im Rahmen des erfindungsgemäßen Verfahrens, also dem Berechnen bzw. Herleiten der Oberflächengeometrien von nicht sichtbaren Bereichen aus den erfassten Oberflächengeometrien der sichtbaren Bereiche des Objektes, keine Veränderungen am Kiefer, den Zähnen oder anderen zum menschlichen Körper gehörenden intraoralen Strukturen erfolgen.

Wenn von einem früheren Zeitpunkt die Lage der Knochen und der Zähne relativ zueinander bekannt ist und mit dem Gingiva-Former auch umliegende Zähne erfasst werden, kann aus der gemessenen Lage des Gingiva-Formers relativ zu den Zähnen und der errechneten Lage des Implantats auch die relative Lage des Implantats im Knochen hergeleitet werden.

Fig. 5 zeigt eine Weiterbildung der Erfindung analog zur Darstellung von Fig. 1. Dabei wird eine Ergänzung 53 des Gingiva-Formers 5 mit dem Gingiva-Former 5 lösbar verbunden, üblicherweise in diesen geschraubt. Der Gingiva-Former kann hierfür eine entsprechende Montageeinrichtung, beispielsweise ein Gewinde, aufweisen. Eine solche Ergänzung kann beispielsweise ein aus dem Stand der Technik bekanntes ScanAbutment sein oder aber auch nur die Oberflächeneigenschaften eines Scan-Abutments haben und darüber hinaus an die Verwendung im Zusammenhang mit einem Gingiva-Former angepasst sein.
Mit einer solchen Ergänzung 53 kann die genaue Orientierung und Positionierung des Gingiva-Formers 5 im Zahnfleisch 1 und in darunter liegenden Strukturen, wie beispielsweise Knochen, mit größerer Sicherheit bestimmt werden, was die Qualität des Verfahrens insgesamt verbessert.

In einer weiteren, bevorzugten Ausführungsform der Erfindung werden alle notwendigen Berechnungen auf derselben Recheneinheit ausgeführt. Es ist also nicht notwendig, die Daten nach dem Scannen auf einen spezialisierten Rechner zu transferieren. Dadurch wird die Handhabung eines mit einem erfindungsgemäßen Verfahren betrieben Scanners vereinfacht und gestaltet sich zudem kostengünstiger.

### Bezugszeichenliste

- 1: Zahnfleisch
- 11: erfasste Oberflächengeometrie des Zahnfleisches
- 12: errechnete Oberflächengeometrie des Zahnfleisches
- 2: Zahn
- 21: erfasste Oberflächengeometrie des Zahns
- 3: Zahn
- 31: erfasste Oberflächengeometrie des Zahns
- 4: Implantat
- 5: Gingiva-Former
- 51: erfasste Oberflächengeometrie des Gingiva-Formers
- 52: bekannte Oberflächengeometrie des Gingiva-Formers
- 53: Ergänzung des Gingiva-Formers, die eine bekannte Oberflächengeometrie aufweist

## Patentansprüche

1. Verfahren zum optischen Erfassen der Oberflächengeometrie von Zahnfleisch (1), **dadurch gekennzeichnet, dass** sich im Bereich des zu erfassenden Zahnfleisches (11, 12) ein Objekt (5) mit bekannter Oberflächengeometrie (52), insbesondere ein Gingiva-Former befindet, dass eine Oberflächengeometrie (11, 21, 31, 51) des Bereiches zusammen mit dem Objekt (5) optisch erfasst wird und dass die bekannte Oberflächengeometrie (52) des Objektes (5) von der erfassten Oberflächengeometrie (51) subtrahiert wird.

2. Verfahren nach Anspruch 1, **dadurch gekennzeichnet, dass** das Subtrahieren in wenigstens zwei Schritten erfolgt.

3. Verfahren nach Anspruch 2, **dadurch gekennzeichnet, dass** einer der Schritte des Subtrahierens das Entfernen der sichtbaren Bestandteile des Objekts (5) mit bekannter Oberflächengeometrie (52) beinhaltet.

4. Verfahren nach Anspruch 2 oder 3, **dadurch gekennzeichnet, dass** einer Schritte des Subtrahierens das Erzeugen einer errechneten Oberflächengeometrie (12) aus den umgekehrten nicht sichtbaren Anteilen der bekannten Oberflächengeometrie (52) beinhaltet und dass die errechnete Oberflächengeometrie (12) in die erfasste Oberflächengeometrie (11) eingefügt wird.

5. Verfahren nach Anspruch 4, **dadurch gekennzeichnet, dass** eine Umgebungsfarbe der subtrahierten Oberflächengeometrie erfasst wird und dass die errechnete Oberflächengeometrie (12) in einer Farbe entsprechend der erfassten Umgebungsfarbe angezeigt wird.

6. Verfahren nach einem der Ansprüche 1 bis 5, **dadurch gekennzeichnet, dass** von mehreren verschiedenen, bekannten Objekten Oberflächengeometrien hinterlegt sind und eine bekannte Oberflächengeometrie für das Verfahren ausgewählt wird.

7. Verfahren nach einem der Ansprüche 1 bis 6, **dadurch gekennzeichnet, dass** alle rechnerischen Schritte zum Erfassen und Subtrahieren auf derselben Recheneinheit ausgeführt werden.

8. Verfahren nach Anspruch 7, **dadurch gekennzeichnet, dass** die rechnerischen Schritte in Echtzeit erfolgen.

9. Verfahren nach einem der Ansprüche 1 bis 8, **dadurch gekennzeichnet, dass** alle Oberflächengeometrien, insbesondere auch während des Subtrahierens, als TSDF notiert sind.

10. Verfahren nach einem der Ansprüche 1 bis 9, **dadurch gekennzeichnet, dass** das Objekt (5) während des Scannens eine mit dem Objekt (5) lösbar verbundene Scanhilfe (53), insbesondere ein Scanabutment, aufweist.

11. Verfahren nach einem der Ansprüche 1 bis 10, **dadurch gekennzeichnet, dass** die erfasste und die errechnete Oberflächengeometrie (11, 12) hinterlegt werden und dass beide Oberflächengeometrien jeweils abwechselnd visualisiert werden.

12. Verfahren nach Anspruch 11, **dadurch gekennzeichnet, dass** das abwechselnde Anzeigen aufgrund einer Eingabe durch einen Nutzer erfolgt und dass der Wechsel beider Anzeigen in Echtzeit erfolgt.

13. Verfahren nach Anspruch 11 oder 12, **dadurch gekennzeichnet, dass** die Anzeigen während des Wechselns in Echtzeit erfolgen.
